# EUROPÄISCHE PATENTSCHRIFT

(11) **EP 3 300 883 B1**
(45) Veröffentlichungstag und Bekanntmachung des Hinweises auf die Patenterteilung: **10.04.2019**
(21) Anmeldenummer: 17189394.4
(22) Anmeldetag: 05.09.2017
(51) Int. Cl.: B32B 15/08, B32B 38/00

(54) **HERSTELLUNG EINES KANTENSCHUTZES**
MAKING OF AN EDGE PROTECTION
PROCEDE DE PROTECTION DE BORDS

(30) Priorität: 30.09.2016 DE 102016219050
(43) Veröffentlichungstag der Anmeldung: 04.04.2018
(73) Patentinhaber: ThyssenKrupp Steel Europe AG, 47166 Duisburg (DE); thyssenkrupp AG, 45143 Essen (DE)
(72) Erfinder: Kimpel, Matthias, 58332 Schwelm (DE)
(74) Vertreter: thyssenkrupp Intellectual Property GmbH

(56) Entgegenhaltungen:
- WO-A2-2005/110735
- CN-A- 104 760 340
- DE-A1-102012 107 151

## Beschreibung

### Technisches Gebiet

Die vorliegende Anmeldung betrifft ein Verfahren zur Herstellung eines Verbundblechabschnitts.

### Technischer Hintergrund

Bei Verbundblechen, die aus zwei metallischen Deckblechen und einer dazwischen angeordneten thermoplastischen Kunststoffschicht bestehen (wie in DE--10 2012 107 151) zeigen sich aufgrund von auftretenden Scherkräften bei Schneid-bzw. Trennprozessen lokale Enthaftungserscheinungen, insbesondere im Kantenbereich. Die sich zwischen der Kunststoffschicht und dem Deckblech bildenden Mikrospalte können in weiteren Prozessschritten zu einer weiterführenden Delamination führen.

### Zusammenfassung der Erfindung

Der Erfindung liegt somit die Aufgabe zu Grunde ein verbessertes Verfahren zur Herstellung von Verbundblechabschnitten bereitzustellen.

Gelöst wird diese Aufgabe durch ein Verfahren zur Herstellung eines Verbundblechabschnitts mit den Merkmalen des Patentanspruchs 1.

Gemäß dem erfindungsgemäßen Verfahren wird zunächst ein Verbundblech bestehend aus einem ersten und zweiten metallischen Deckblech und einer dazwischen angeordneten thermoplastischen Kunststoffschicht bereitgestellt.

Vorzugsweise handelt es sich bei den metallischen Deckblechen um Deckbleche mit einer Dicke im Bereich von 200 bis 250 µm und bei der thermoplastischen Kunststoffschicht um eine Kunststoffschicht mit einer Dicke im Bereich von 300 bis 1000 µm.

Vorzugsweise weist die thermoplastische Kunststoffschicht eine Dichte im Bereich von 1 bis 1,1 g/cm³ auf.

Gemäß einer bevorzugten Ausführungsform sind die Deckbleche ein-, mehr bevorzugt beidseitig elektrolytisch verzinkt, um Korrosionsanforderungen zu erfüllen.

Sodann erfolgt das Abtrennen eines Verbundblechabschnitts entlang einer ersten Trennlinie mittels einem ersten Schneidwerkzeug ausgehend von dem ersten metallischen Deckblech sowie entlang einer zweiten Trennlinie mittels einem zweiten Schneidwerkzeug ausgehend von dem zweiten metallischen Deckblech, so dass durch das Abtrennen eine Schneidkante erzeugt wird. Anschließend erfolgt ein Auftragen einer Sealer-Beschichtung auf die Schneidkante, wobei die Sealer-Beschichtung eine Reaktionssubstanz bereitstellt, die mit einer in der Kunststoffschicht enthaltenen Vorsubstanz zu einer Korrosionsschutzschicht reagiert für einen Korrosionsschutz von freigelegten Bereichen des ersten Deckblechs und/oder des zweiten Deckblechs.

Gemäß einer bevorzugten Variante werden die erste Trennlinie und die zweite Trennlinie in einer Verbundblechebene zueinander versetzt positioniert.

Gemäß einer weiteren bevorzugten Variante wird das Abtrennen mittels gegenläufiger Bewegung des ersten Schneidwerkzeugs und des zweiten Schneidwerkzeugs mit nachfolgendem Wegbewegen beider Schneidwergzeuge von dem Verbundblechabschnitt herbeigeführt.

Gemäß einer anderen bevorzugten Variante wird nach dem Auftragen der Sealer-Beschichtung auf die Schneidkante ein Kompaktieren der Sealer-Beschichtung herbeigeführt.

Das Kompaktieren der Sealer-Beschichtung wird vorzugsweise mittels thermischen Eintrags in die Sealer-Beschichtung herbeigeführt, der durch UV-Strahlung, NIR-Strahlung, Laserstrahlung und/oder Plasma in die Sealer-Beschichtung eingetragen wird.

Vorzugsweise weist die Kernschicht und/oder die Sealer-Beschichtung einen Dampfphaseninhibitor auf zur Verminderung von Gasphaseneinschlüssen zwischen Sealer-Beschichtung und Schneidkante.

Vorzugsweise weist die Sealer-Beschichtung, die Kernschicht und/oder ein zwischen der Kernschicht und einer oder beider der Deckschichten befindlicher Haftvermittler einen Korrosionsinhibitor auf zur Bereitstellung von lokalem Korrosionsschutz von einem freigelegten Bereich wenigstens einer der Deckschicht.

Vorzugsweise ist die Sealer-Beschichtung elektrisch leitfähig zur Ermöglichung einer Überbeschichtung der Sealer-Beschichtung mittels eines Elektrotauchbadverfahren.

Gemäß einer bevorzugten Ausführungsform wird die Aktivierung der Reaktion der Reaktionssubstanz mit der Vorsubstanz mittels thermischer Energie herbeigeführt, bevorzugt in einem Ofenprozess, der nach einer Beschichtung des Verbundblechabschnitts mit einem Elektrotauchbadverfahren erfolgt.

### Kurze Beschreibung der Zeichnungen

Im Folgenden wird die Erfindung anhand von Zeichnungen näher erläutert. Im Einzelnen zeigen:
- Fig. 1: einen Abtrennvorgang gemäß einem Verfahrensschritt der vorliegender Erfindung,
- Fig. 2: einen Verbundblechabschnitt mit einer Sealer-Beschichtung.

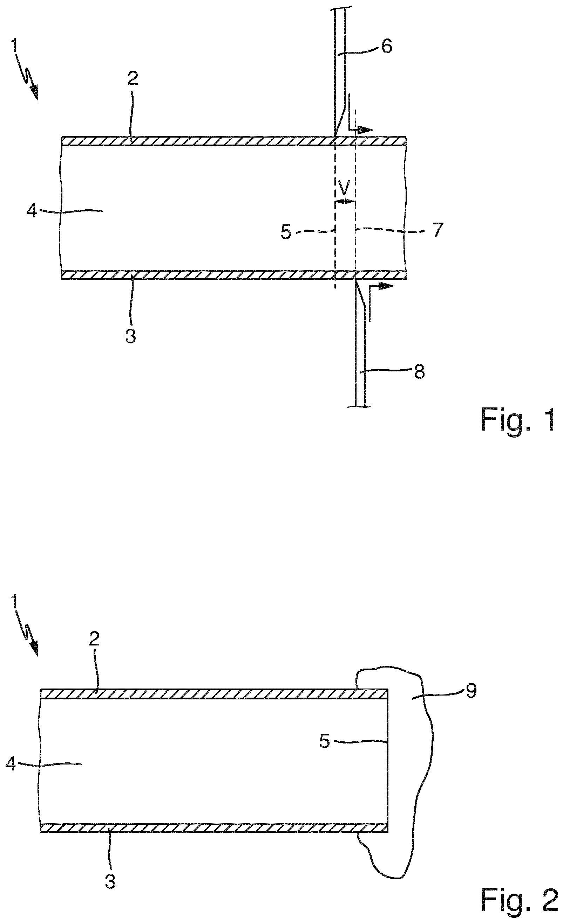

Fig. 1 zeigt einen Abtrennvorgang eines Verbundblechabschnitts 1 aus einem Verbundblech. Der Verbundblechabschnitt 1 besteht aus einem ersten und zweiten metallischen Deckblech 2, 3 und einer dazwischen angeordneten thermoplastischen Kunststoffschicht 4. Mit einem nicht näher dargestellten Schneidvorrichtung erfolgt ein Abtrennen des Verbundblechabschnitts 1 entlang einer ersten Trennlinie 5 mittels einem ersten Schneidwerkzeug 6 ausgehend von dem ersten metallischen Deckblech 2 sowie entlang einer zweiten Trennlinie 7 mittels einem zweiten Schneidwerkzeug 8 ausgehend von dem zweiten metallischen Deckblech 3, so dass durch das Abtrennen eine Schneidkante erzeugt wird, die der ersten Trennlinie 5 entspricht. Gemäß einer bevorzugten Variante des Verfahrens werden die erste Trennlinie 5 und die zweite Trennlinie 7 in einer Verbundblechebene zueinander versetzt positioniert, dargestellt durch V in Fig. 1. Hierdurch erfolgt eine Doppelscheerung mit exakter versetzter Führung der beiden Schneidwerkzeuge 6, 8. Gemäß einer weiteren bevorzugten Variante wird das Abtrennen mittels gegenläufiger Bewegung des ersten Schneidwerkzeugs 6 und des zweiten Schneidwerkzeugs 8 mit nachfolgendem Wegbewegen gemäß der jeweiligen Pfeilrichtung beider Schneidwergzeuge 6, 8 von dem Verbundblechabschnitt 1 herbeigeführt.

Fig. 2 zeigt einen Verbundblechabschnitt 1 bestehend aus einem ersten und zweiten metallischen Deckblech 2, 3 und einer dazwischen angeordneten thermoplastischen Kunststoffschicht 4 mit einer Sealer-Beschichtung 9 auf der Schneidkante 5.

### Bezugszeichenliste

- 1: Verbundblechabschnitt
- 2: erstes metallische Deckblech
- 3: zweites metallische Deckblech
- 4: thermoplastischen Kunststoffschicht
- 5: erste Trennlinie, Schneidkante
- 6: erstes Schneidwerkzeug
- 7: zweite Trennlinie
- 8: zweites Schneidwerkzeug
- 9: Sealer-Beschichtung

## Patentansprüche

1. Verfahren zur Herstellung eines Verbundblechabschnitts umfassend die folgenden Schritte:
- Bereitstellen eines Verbundblechs bestehend aus einem ersten und zweiten metallischen Deckblech und einer dazwischen angeordneten thermoplastischen Kunststoffschicht,
- Abtrennen eines Verbundblechabschnitts entlang einer ersten Trennlinie mittels einem ersten Schneidwerkzeug ausgehend von dem ersten metallischen Deckblech sowie entlang einer zweiten Trennlinie mittels einem zweiten Schneidwerkzeug ausgehend von dem zweiten metallischen Deckblech, indem durch das Abtrennen eine Schneidkante erzeugt wird,
- Auftragen einer Sealer-Beschichtung auf die Schneidkante, wobei die Sealer-Beschichtung eine Reaktionssubstanz bereitstellt, die mit einer in der Kunststoffschicht enthaltenen Vorsubstanz zu einer Korrosionsschutzschicht reagiert für einen Korrosionsschutz von freigelegten Bereichen des ersten Deckblechs und/oder des zweiten Deckblechs.

2. Verfahren nach Anspruch 1, wobei die erste Trennlinie und die zweite Trennlinie in einer Verbundblechebene zueinander versetzt positioniert werden.

3. Verfahren nach Anspruch 1 oder 2, wobei das Abtrennen mittels gegenläufiger Bewegung des ersten Schneidwerkzeugs und des zweiten Schneidwerkzeugs mit nachfolgendem Wegbewegen beider Schneidwergzeuge von dem Verbundblechabschnitt herbeigeführt wird.

4. Verfahren nach einem der vorhergehenden Ansprüche 1 bis 3, wobei nach dem Auftragen der Sealer-Beschichtung auf die Schneidkante ein Kompaktieren der Sealer-Beschichtung herbeigeführt wird.

5. Verfahren nach Anspruch 4, wobei das Kompaktieren der Sealer-Beschichtung mittels thermischen Eintrags in die Sealer-Beschichtung herbeigeführt wird, der durch UV-Strahlung, NIR-Strahlung, Laserstrahlung und/oder Plasma in die Sealer-Beschichtung eingetragen wird.

6. Verfahren nach einem der vorhergehenden Ansprüche 1 bis 5, wobei die Kernschicht und/oder die Sealer-Beschichtung einen Dampfphaseninhibitor aufweist zur Verminderung von Gasphaseneinschlüssen zwischen Sealer-Beschichtung und Schneidkante.

7. Verfahren nach einem der vorhergehenden Ansprüche 1 bis 6, wobei die Sealer-Beschichtung, die Kernschicht und/oder ein zwischen der Kernschicht und einer oder beider der Deckschichten befindlicher Haftvermittler einen Korrosionsinhibitor aufweist zur Bereitstellung von lokalem Korrosionsschutz von einem freigelegten Bereich wenigstens einer der Deckschicht.

8. Verfahren nach einem der vorhergehenden Ansprüche 1 bis 7, wobei die Sealer-Beschichtung elektrisch leitfähig ist zur Ermöglichung einer Überbeschichtung der Sealerbeschichtung mittels Elektrotauchbadverfahren.

9. Verfahren nach einem der vorhergehenden Ansprüche 1 bis 8, wobei eine Aktivierung der Reaktion der Reaktionssubstanz mit der Vorsubstanz mittels thermischer Energie herbeigeführt wird, bevorzugt in einem Ofenprozess, der nach einer Beschichtung des Verbundblechabschnitts mit einem Elektrotauchbadverfahren erfolgt.

## Claims

1. Method for producing a portion of a composite sheet, comprising the following steps:
- providing a composite sheet consisting of a first and a second metallic outer sheet and a layer of thermoplastic material arranged in between,
- cutting off a portion of the composite sheet along a first separating line by means of a first cutting tool, starting from the first metallic outer sheet, and along a second separating line by means of a second cutting tool, starting from the second metallic outer sheet, while the cutting-off action creates a cut edge,
- applying a sealer coating to the cut edge, wherein the sealer coating provides a reaction substance which reacts with a precursor substance contained in the layer of plastic to form a corrosion protection layer for corrosion protection of exposed regions of the first outer sheet and/or of the second outer sheet.

2. Method according to Claim 1, wherein the first separating line and the second separating line are positioned offset in relation to one another in a plane of the composite sheet.

3. Method according to Claim 1 or 2, wherein the cutting-off action is brought about by means of opposing movement of the first cutting tool and the second cutting tool, with the two cutting tools subsequently moving away from the portion of the composite sheet.

4. Method according to one of the preceding Claims 1 to 3, wherein, after applying the sealer coating to the cut edge, a compacting on the sealer coating is brought about.

5. Method according to Claim 4, wherein the compacting of the sealer coating is brought about by means of heat input into the sealer coating, which is introduced into the sealer coating by UV radiation, NIR radiation, laser radiation and/or plasma.

6. Method according to one of the preceding Claims 1 to 5, wherein the core layer and/or the sealer coating comprise(s) a vapour-phase inhibitor for reducing gas-phase inclusions between the sealer coating and the cut edge.

7. Method according to one of the preceding Claims 1 to 6, wherein the sealer coating, the core layer and/or an adhesion promoter located between the core layer and one or both of the outer layers comprises a corrosion inhibitor for providing local corrosion protection of an exposed region of at least one of the outer layers.

8. Method according to one of the preceding Claims 1 to 7, wherein the sealer coating is electrically conductive to allow an overcoating of the sealer coating by means of an electrophoretic deposition process.

9. Method according to one of the preceding Claims 1 to 8, wherein an activation of the reaction of the reaction substance with the precursor substance is brought about by means of thermal energy, preferably in a furnace process, which is performed after a coating of the portion of the composite sheet by an electrophoretic deposition process.

## Revendications

1. Procédé de fabrication d'une portion de plaque composite, le procédé comprenant les étapes suivantes :
- fournir une plaque composite comprenant des première et deuxième plaques extérieures métalliques et une couche de matière synthétique thermoplastique disposée entre celles-ci,
- séparer une portion de plaque composite le long d'une première ligne de séparation au moyen d'un premier outil de coupe à partir de la première plaque extérieure métallique et le long d'une deuxième ligne de séparation au moyen d'un deuxième outil de coupe à partir de la deuxième plaque extérieure métallique, une arête étant générée par la séparation,
- appliquer un revêtement d'étanchéité sur l'arête, le revêtement d'étanchéité produisant une substance de réaction qui réagit avec une pré-substance contenue dans la couche de matière synthétique pour donner une couche anticorrosion destinée à protéger des zones exposées de la première plaque extérieure et/ou de la deuxième plaque extérieure contre la corrosion.

2. Procédé selon la revendication 1, la première ligne de séparation et la deuxième ligne de séparation étant positionnées de manière décalée l'une par rapport à l'autre dans un plan de plaque composite.

3. Procédé selon la revendication 1 ou 2, la séparation étant effectuée par un mouvement opposé du premier outil de coupe et du deuxième outil de coupe suivi de l'éloignement des deux outils de coupe de la portion de plaque composite.

4. Procédé selon l'une des revendications précédentes 1 à 3, un compactage du revêtement d'étanchéité étant effectué après l'application du revêtement d'étanchéité sur l'arête.

5. Procédé selon la revendication 4, le compactage du revêtement d'étanchéité étant effectué par apport thermique au revêtement d'étanchéité, lequel apport thermique est effectué dans le revêtement d'étanchéité par rayonnement UV, rayonnement NIR, rayonnement laser et/ou plasma.

6. Procédé selon l'une des revendications précédentes 1 à 5, la couche centrale et/ou le revêtement d'étanchéité comportant un inhibiteur de phase vapeur destiné à réduire des inclusions en phase gazeuse entre le revêtement d'étanchéité et l'arête.

7. Procédé selon l'une des revendications précédentes 1 à 6, le revêtement d'étanchéité, la couche centrale et/ou un promoteur d'adhérence situé entre la couche centrale et l'une des couches extérieures, ou les deux, comportant un inhibiteur de corrosion destiné à protéger localement une zone exposée d'au moins une des couches extérieures contre la corrosion.

8. Procédé selon l'une des revendications précédentes 1 à 7, le revêtement d'étanchéité étant électriquement conducteur pour pouvoir recouvrir le revêtement d'étanchéité par un procédé d'électro-immersion.

9. Procédé selon l'une des revendications précédentes 1 à 8, l'activation de la réaction de la substance réactionnelle avec la pré-substance étant réalisée au moyen d'énergie thermique, de préférence dans un procédé au four qui a lieu après un revêtement de la portion de plaque composite avec un procédé d'électro-immersion.
